# EUROPÄISCHE PATENTSCHRIFT

(11) **EP 1 874 563 B1**
(45) Veröffentlichungstag und Bekanntmachung des Hinweises auf die Patenterteilung: **01.10.2008**
(21) Anmeldenummer: 06743316.9
(22) Anmeldetag: 18.04.2006
(51) Int. Cl.: B60C 23/00

(54) **VORRICHTUNG, INSBESONDERE DREHDURCHFÜHRUNG**
DEVICE IN PARTICULAR ROTARY JOINT
DISPOSITIF, EN PARTICULIER PASSAGE TOURNANT

(30) Priorität: 21.04.2005 DE 102005018584
(43) Veröffentlichungstag der Anmeldung: 09.01.2008
(73) Patentinhaber: Deere & Company, Moline, IL 61265-8098 (US)
(72) Erfinder: SOBOTZIK, Joachim, 67245 Lambsheim (DE)
(74) Vertreter: Holst, Sönke
(86) Internationale Anmeldenummer: PCT/EP2006/061634
(87) Internationale Veröffentlichungsnummer: WO 2006/111523

(56) Entgegenhaltungen:
- WO-A-20/04065143
- DE-C1- 19 950 191

## Beschreibung

Die Erfindung betrifft eine Vorrichtung, insbesondere Drehdurchführung für eine Reifenbefüllanlage, mit einem um eine Rotationsachse rotierbaren und eine erste Grenzfläche aufweisenden Körper, einem gegenüber dem rotierbaren Körper feststehenden und eine zweite Grenzfläche aufweisenden Körper, wenigstens einer zwischen dem rotierbaren Körper und dem feststehenden Körper ausgebildeten Kammer, wobei die wenigstens eine Kammer durch die Grenzflächen der Körper und durch wenigstens zwei zwischen den Grenzflächen geführte Dichtmittel begrenzt ist, und wenigstens einem in dem feststehenden und in dem rotierbaren Körper ausgebildeten und zwischen den Dichtmitteln in die wenigstens eine Kammer mündenden Kanal.

Landwirtschaftliche Fahrzeuge werden oft mit Reifendruckregelanlagen ausgestattet, durch die der Reifendruck während der Fahrt bei Feldarbeiten zur Gewährleistung eines niedrigeren Bodendrucks verringert und bei Straßenfahrten wieder erhöht werden kann. Des Weiteren kann dadurch der Reifendruck an unterschiedliche Belastungszustände angepasst und der Verschleiß des Reifens reduziert werden. Bei landwirtschaftlichen Fahrzeugen wird dabei zur Befüllung des Reifens Druckluft über eine in der Achsanordnung enthaltene Drehdurchführung zu den Rädern geführt.

Die DE 199 50 191 C1 offenbart eine Reifendruckregelanlage mit einer gattungsgemäßen Drehdurchführung zur Übertragung eines Druckmittels von einem gegenüber einem drehbar gelagerten Rad feststehenden Teil des Fahrzeugs auf das drehbar gelagerte Rad. Die Drehdurchführung weist wenigstens eine Kammer auf, welche durch einen statorseitig und durch einen rotorseitig konzentrisch zur Drehachse des Rades angeordneten Ringkörper begrenzt ist. Zur Abdichtung der Kammer sind zwischen dem statorseitigen und dem rotorseitigen Ringkörper über eine Steuerleitung steuerbare Dichtringe eingesetzt. Der statorseitige Ringkörper und der rotorseitige Ringkörper sind bezogen auf die Drehachse des Rades nebeneinanderliegend angeordnet, wobei zwischen den Ringkörpern ein Bewegungsspalt belassen ist. In dem statorseitigen Ringkörper sind konzentrische mit den Dichtringen bestückte Ringnuten eingebracht, wobei die Ringnuten an eine mit einem Druckmittel beaufschlagbare Steuerleitung angeschlossen sind. Über einen in die Ringnuten geleiteten Steuerdruck können die Dichtringe in Richtung zum rotorseitigen Ringkörper hin bewegt und angedrückt werden, wodurch die Kammer geschlossen wird. Bei geschlossener Kammer kann dann über in die Kammer mündende Kanäle ein Druckmittelaustausch erfolgen. Im drucklosen Zustand arbeitet die Drehdurchführung berührungslos. Nachteilig wirkt sich aus, dass die zum Schließen der Kammer erforderliche Steuerdruckeinrichtung aufwändig und teuer ist. Des Weiteren sind bei der Realisierung derartiger Drehdurchführungen an landwirtschaftlichen Fahrzeugen, wie z. B. Ackerschleppern, relativ große Durchmesser der Dichtflächen erforderlich, wodurch hohe Relativgeschwindigkeiten auftreten, die mit einem erheblichen Verschleiß verbunden sind. Über diese Verschleißproblematik hinaus, müssen die Dichtungen in der Lage sein, mechanische Verformungen auszugleichen und entstehende Änderungen in der abzudichtenden Geometrie zu tolerieren.

Die der Erfindung zugrunde liegende Aufgabe wird darin gesehen, eine für eine Reifenbefüllanlage geeignete Vorrichtung zu schaffen, mit der ein oder mehrere der genannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Vorrichtung der eingangs genannten Art derart ausgebildet, dass die Dichtmittel als Bürstendichtungen ausgebildet sind. Die Grenzflächen der Körper sind im Wesentlichen einander zugewandt angeordnet, so dass die Dichtmittel zusammen mit den Grenzflächen eine über den Umfang der Rotationsachse geschlossene Kammer ausbilden, wobei das Volumen der Kammer durch die Abstände zwischen den Grenzflächen bzw. den Dichtmitteln bestimmt wird. Bürstendichtungen sind an sich bekannt und werden speziell im Bereich von Verdichtern eingesetzt, da sie gegenüber berührungslosen Dichtungen (sogenannten Spaltdichtungen) eine geringere Leckage aufweisen. Bürstendichtungen sind berührende Dichtungen, dessen Kernstück ein hoch flexibles Dichtungselement ist, welches aus einer Vielzahl von Drähten, Fasern oder Fäden bzw. aus einer Kombination derer, besteht und sich adaptiv an eine zu dichtende Fläche anpasst. Bürstendichtungen können dadurch Änderungen eines Dichtspalts, beispielsweise bei Rotorbewegungen, nahezu verschleißfrei kompensieren. Konventionelle Bürstendichtungen werden beispielsweise über ein Schweißverfahren hergestellt, bei dem eine dichtende Anordnung von Drähten zwischen zwei Ringelementen gespannt und über eine Umfangsschweißnaht mit den Ringelementen verschweißt wird. Neuartige Verfahren zur Herstellung von Bürstendichtungen ermöglichen die Verwendung von Kunststofffasern. Dabei werden die Bürstendrähte oder -fasern um einen ringförmigen Kern (Trägerdraht) gelegt und mittels eines Klemmrohrs auf den Kern festgeklemmt. Derartige Bürstendichtungen werden beispielsweise von der Firma MTU entwickelt und gefertigt. Für weitere detaillierte Ausführungen zu Bürstendichtungen wird hiermit auf die "Engineering News" der Internetseite der MTU Aero Engines hingewiesen, insbesondere auf den Report "The MTU Brush Seal Design".

Bürstendichtungen weisen gegenüber konventionellen Dichtungen, die bei Reifenbefüllanlagen eingesetzt werden entscheidende Vorteile auf. Gegenüber berührungslosen Dichtungen haben Bürstendichtungen den Vorteil nahezu verschleißfrei zu sein. Sie haben eine gegenüber berührungslosen Dichtungen deutlich höhere Dichtwirkung, d. h. bei vergleichbarer Druckdifferenz ist ihre Baulänge (Kontaktfläche) deutlich geringer. Bürstendichtungen arbeiten auch bei einer Relativbewegung zwischen einem rotierendem und einem stehendem Dichtungsteil zuverlässiger als konventionelle berührungslose Dichtungen. Bei Wellenstillstand bzw. bei geringen Drehzahlen stehen die Bürsten in Kontakt mit der relativbewegten Dichtfläche, so dass dann eine zuverlässige Abdichtung der Kammer gewährleistet wird. Bei höheren Drehzahlen heben die Bürsten aufgrund von aerodynamischen Kräften ab. Hierdurch wird der Verschleiß sehr stark reduziert, wodurch sehr hohe Standzeiten erreicht werden. Der Einsatz von Bürstendichtungen ermöglicht es somit, auf eine gesonderte Einrichtung zum Andrücken von Dichtungen, wie sie beispielsweise in der eingangs aufgeführten DE 199 50 191 C1 beschrieben ist, zu verzichten und gleichzeitig eine hohe Dichtungseigenschaft zu erzielen. Damit entfällt auch ein aufwändiges Einbringen von druckbeaufschlagbaren Ringnuten zur Führung von Dichtmitteln, welches einer hohen Fertigungspräzision bedarf, wodurch ein geringerer Fertigungs- und Kostenaufwand erzielt wird. Der durch den wenigstens einen Kanal beaufschlagte Druck in der Kammer wird dabei durch die Bürstendichtungen gehalten, wobei die bei einer Bürstendichtung auftretende Leckage vernachlässigbar klein bzw. unwesentlich ist. Da die Kammer durch die Dichtmittel nahezu druckdicht geschlossen wird, kann ein Druckmittelaustausch durch die im rotierbaren und im feststehenden Körper angeordneten Kanäle erfolgen, während sich der rotierbare Teil gegenüber dem feststehenden Teil in Rotation befindet. Es wird eine Drehdurchführung geschaffen, die ein Überführen eines Druckmittels von einem Kanal über die Kammer in den gegenüberliegenden Kanal ermöglicht, ohne die Rotationsbewegung des rotierbaren Körpers unterbrechen zu müssen. Dabei können, ausgehend vom rotierbaren und vom feststehenden Körper, mehrere Kanäle in eine Kammer münden, wodurch der Gesamtvolumenstrom einer Druckmittelzuführung erhöht werden kann und dadurch Befüll- oder Entleerzeiten reduziert werden.

Zwischen den Grenzflächen können durch Anordnung von weiteren Dichtmitteln bzw. Bürstendichtungen mehrere Kammern ausgebildet sein. Beispielsweise wird durch Hinzufügen eines dritten Dichtmittels die erste Kammer in zwei Kammern unterteilt. Durch ein viertes Dichtmittel können diese Kammern auch völlig voneinander getrennt ausgebildet sein oder gar eine dritte Kammer gebildet werden, bzw. eine Kammer durch zwei teilende Dichtmittel in drei Kammern unterteilt werden. In jede der Kammern können dabei Kanäle führen, durch welche ein Druck zum nahezu vollständigen Abdichten der Kammern gegenüber der Umgebung aufgebaut werden kann. Vorzugsweise sind drei Dichtmittel angeordnet, durch welche zwei Kammern abgegrenzt werden. Der Einsatz von Bürstendichtungen bei Drehdurchführungen zur Reifenbefüllung, ermöglicht beispielsweise eine Drehdurchführung für einen Füllvolumenstrom für einen Reifen als auch eine Drehdurchführung für einen Schaltvolumenstrom für ein Reifenventil. Eine Kombination einer Drehdurchführung für einen Füllvolumenstrom mit einem elektrisch betätigbaren Reifenventil ist jedoch ebenfalls denkbar.

In einer bevorzugten Ausgestaltung der Erfindung sind auf wenigstens einer der Grenzflächen der Körper Vertiefungen ausgebildet, durch welche die Dichtmittel, lagefixiert oder lagebegrenzt zwischen den Grenzflächen positionierbar sind. Die Dichtmittel werden dabei vorzugsweise in die Vertiefungen eingesetzt bzw. eingepasst. Die Vertiefungen sind vorzugsweise als zur Rotationsachse des Rades konzentrisch angeordnete Ringnuten ausgebildet und erstrecken sich koaxial zur Rotationsachse über den gesamten Umfang einer Grenzfläche. Die Anordnung von Ringnuten zur Fixierung der Dichtmittel stellt dabei nur eine mögliche Ausführungsform dar. Die Dichtmittel können selbstverständlich auch auf andere Weise an der Grenzfläche fixiert bzw. befestigt werden.

Für einen erfindungsgemäßen Einsatz bei einer Drehdurchführung für eine Reifenbelüftungsanlage eignen sich Bürstendichtungen aus metallischen und/oder nicht-metallischen Fasern oder Fäden. Dabei können verschiedene faser- oder fadenartige Materialien eingesetzt werden, die eine genügende Verformbarkeit bei ausreichender Steifigkeit aufweisen. So können beispielsweise Bürstendichtungen, die eine Vielzahl von gebündelten Metalldrähten bzw. -fäden aufweisen, oder auch Bürstendichtungen mit gebündelten Fasern aus Keramik oder Kunststoffen eingesetzt werden.
Die in dem feststehenden Körper und dem rotierbaren Körper angeordneten Kanäle können als druckmittelbetriebene Abführ- oder Zuführleitungen ausgebildet sein. So kann über den in dem feststehenden Körper angeordneten Kanal Druckmittel, beispielsweise Druckluft, in die Kammer geführt und in den im rotierbaren Körper ausgebildeten Kanal überführt werden. Ferner kann ein weiterer Kanal ausgebildet sein, der beispielsweise als Steuerleitung für ein druckmittelbetriebenes Schaltelement dient.

In einem Ausführungsbeispiel ist der rotierbare Körper mit einem Rad verbunden, welches mit einem luftbefüllbaren Reifen versehen ist. Der an dem rotierbaren Körper ausgebildete Kanal führt dabei in einen vom Reifen umgebenen Hohlraum bzw. er ist mit dem Hohlraum des Reifens verbunden, der beispielsweise mit Luft oder Gas befüllbar ist. Der mit dem Hohlraum des Reifens verbundene Kanal kann dabei sowohl als Befüllleitung als auch als Entleerleitung dienen.

Ein als Steuerleitung ausgebildeter Kanal ist vorzugsweise mit einem durch Druckmittel ansteuerbaren Ventil verbunden. Dabei können beispielsweise der rotierbare Körper oder sich auf dem rotierbaren Körper befindliche Bauteile mit einem derartigen Ventil ausgerüstet sein und über die Steuerleitung geschaltet bzw. geöffnet oder geschlossen werden. Es ist auch denkbar andere druckmittelbetriebene Schaltmittel, beispielsweise Druckschalter, über eine derartige Steuerleitung zu schalten. Ein als Steuerleitung ausgebildeter Kanal kann beispielsweise dazu dienen, ein Ventil entgegen einem am Ventil wirkenden und das Ventil verschließenden Schließdruck zu öffnen, so dass beispielsweise ein mit Luft befüllter Reifen durch Öffnen des Ventils über die Steuerleitung entleert werden kann.

Wenigstens ein Kanal ist mit einer Druckmittelquelle verbunden, die das zur Druckbeaufschlagung eines am rotierbaren Körper befindlichen Bauteils, beispielsweise eines Reifens, benötigte Druckmittel fördert. Vorzugsweise wird hierzu eine Druckluftpumpe oder ein Druckluftkompressor eingesetzt.

Der feststehende Körper ist vorzugsweise mit einem feststehenden Achstrichter verbunden bzw. drehfest am Achstrichter abgestützt, so dass eine Verbindung zwischen den Druckluftleitungen und einem am Achstrichter vorgesehenen Anschluss zu einer Druckluftversorgung erfolgt. Der feststehende Körper ist vorzugsweise über Drehmomentstützen in Form von Verbindungsstiften, Verbindungslaschen oder anderen Verbindungselementen mit dem Achstrichter verbunden.

In einer bevorzugten Ausgestaltung der Erfindung sind die die Kammern bildenden Grenzflächen derart angeordnet, dass sie sich radial zur Rotationsachse und in Umfangsrichtung erstrecken, so dass die Fasern bzw. Fäden der Bürstendichtungen im Wesentlichen parallel zur Rotationsachse ausgerichtet sind.

In einer alternativen Ausgestaltung der Erfindung sind die die Kammern bildenden Grenzflächen derart angeordnet, dass sie sich axial zur Rotationsachse und in Umfangsrichtung erstrecken, so dass die Fasern bzw. Fäden der Bürstendichtungen im Wesentlichen radial zur Rotationsachse ausgerichtet sind.

Eine erfindungsgemäße Vorrichtung wird vorzugsweise an einem Fahrzeug, insbesondere einem landwirtschaftlichen Schlepper, vorgesehen. So können beispielsweise Nutzfahrzeuge und Maschinen aus dem Bereich der Land-, Bau- und Forstwirtschaft mit derartigen Vorrichtungen ausgerüstet sein, um eine Reifendruckfüllanlage zu realisieren. Auch für Lastkraftwagen oder Omnibusse sind derartige Vorrichtungen geeignet. Eine erfindungsgemäße Vorrichtung als Teil einer Reifenbefüllanlage ermöglicht während der Fahrt den Reifendruck schnell und präzise an die Betriebsverhältnisse (Bodenbeschaffenheit, Ladegewicht etc.) anzupassen.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Seitenansicht eines landwirtschaftlichen Schleppers mit einer erfindungsgemäßen Vorrichtung,
- Fig. 2: eine schematische Querschnittsansicht der erfindungsgemäßen Vorrichtung aus Figur 1 und
- Fig. 3: eine schematische Querschnittsansicht der erfindungsgemäßen Vorrichtung in einer alternative Ausführungsform.

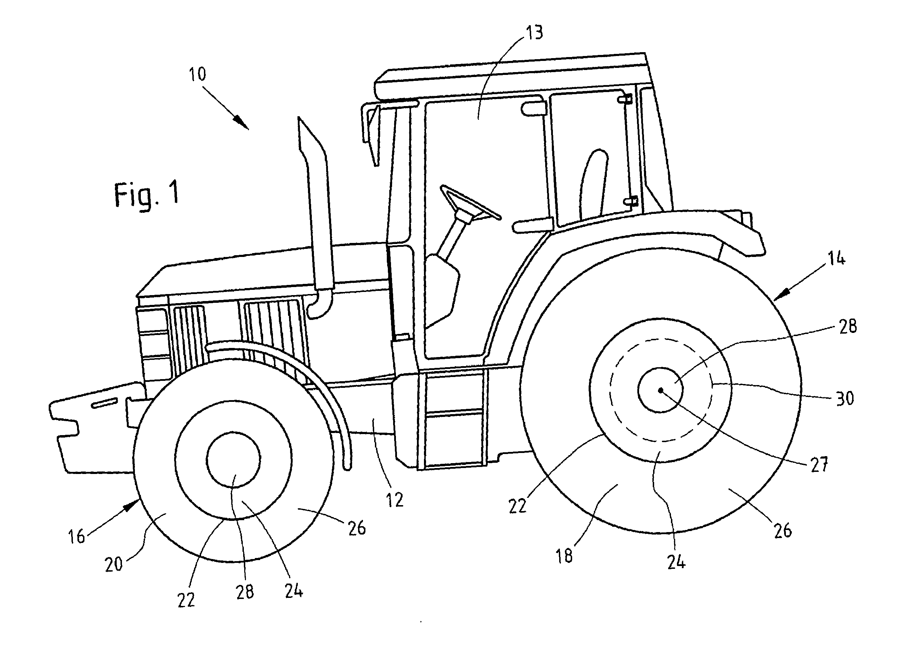

Fig. 1 zeigt einen landwirtschaftlichen Schlepper 10 mit einem Rahmen 12, einer Kabine 13, einer hinteren Achsanordnung 14 und einer vorderen Achsanordnung 16. Die Achsanordnungen weisen hintere Räder 18 bzw. vordere Räder 20 auf. Die Räder 18, 20 weisen jeweils eine Felgenkonstruktion 22 mit einer Radscheibe 24 sowie einen Reifen 26 auf, wobei die Radscheiben 24 über Gewindebolzen 25 mit an den Achsanordnungen 14, 16 konzentrisch zur Rotationsachse 27 angeordneten Radnaben 28 verbunden sind. Die hintere Achsanordnung 14 ist mit einer erfindungsgemäßen Vorrichtung 30, die als Drehdurchführung einer Reifenbefüllanlage (nicht gezeigt) ausgebildet ist, versehen. Eine derartige Vorrichtung 30 ist bei dem in Figur 1 dargestellten Ausführungsbeispiel auf beiden Seiten der hinteren Achsanordnung 14 vorgesehen, wobei derartige Vorrichtungen 30 auch an der vorderen Achsanordnung 16 einsetzbar sind.

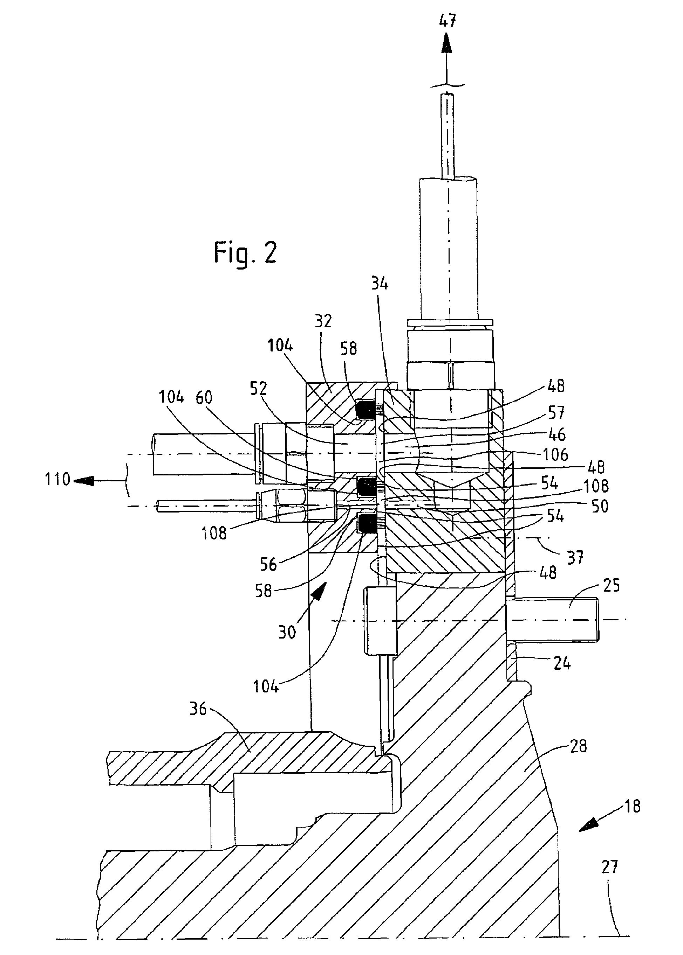

Die Vorrichtung 30 weist einen feststehenden ringförmigen Körper bzw. Stator 32 und einen rotierbaren ringförmigen Körper bzw. Rotor 34 auf und ist in einem ersten Ausführungsbeispiel in Figur 2 dargestellt. Der Stator 32 stützt sich in nicht dargestellter Weise auf einem einen Antriebsstrang (nicht gezeigt) des Schleppers 10 umgebenden Achskörper 36 ab. Das Rad 18 wird von Lageranordnungen (nicht gezeigt), die sich zwischen dem Achskörper 36 und der Radnabe 28 erstrecken gehalten. Der Rotor 34 ist auf der Radnabe 28 gelagert und fest mit dieser verbunden, beispielsweise über Verschraubungen 37 (nicht im Detail gezeigt) mit der Radscheibe 24. Die Radnabe 28 ist antriebsseitig mit dem Antriebsstrang (nicht gezeigt) des Schleppers 10 und abtriebsseitig mit der Radscheibe 24 verbunden ist.

Im Rotor 34 ist ein erster Kanal 46 ausgebildet, der in einem rechtwinkligen Verlauf, ausgehend von einer zur Rotationsachse 27 im Wesentlichen radialen Erstreckung, an einer sich im Wesentlichen radial zur Rotationsachse 27 erstreckenden ersten Grenzfläche 48 mündet, wobei die erste Grenzfläche 48 eine zur Antriebsseite des Schleppers 10 gerichtete Außenfläche des Rotors 34 darstellt. In seiner von der Grenzfläche 48 fortführenden Richtung mündet der erste Kanal 46 in ein über Druck ansteuerbares Reifenventil 47 bzw. stellt eine Verbindung zum Reifen 26 her.

Im Rotor 34 ist ein zweiter Kanal 50 ausgebildet, der in einem rechtwinkligen Verlauf, ausgehend von einer zur Rotationsachse 27 im Wesentlichen radialen Erstreckung, ebenfalls an der ersten Grenzfläche 48 mündet. In seiner von der Grenzfläche 48 fortführenden Richtung mündet der zweite Kanal 50 in das Reifenventil 47 und stellt eine Steuerleitung zum Öffnen des Reifenventils 47 dar, so dass das Reifenventil 47 über den zweiten Kanal 50 druckmittelgesteuert öffenbar ist.

Im Stator 32 ist ein im Wesentlichen axial zur Rotationsachse 27 verlaufender dritter Kanal 52 ausgebildet, der an einer sich im Wesentlichen radial zur Rotationsachse 27 erstreckenden zweiten Grenzfläche 54 mündet, wobei die zweite Grenzfläche 54 eine zur Abtriebsseite des Schleppers 10 gerichtete Außenfläche des Stators 34 darstellt.

Im feststehenden Körper 32 ist ein im Wesentlichen axial zur Rotationsachse 27 verlaufender vierter Kanal 56 ausgebildet, der ebenfalls an der zweiten Grenzfläche 54 mündet.

Zwischen den Grenzflächen 48 und 54 ist eine Bewegungsspalt 57 ausgebildet, so dass der Rotor 32 gegenüber dem Stator 34 frei rotieren kann.

Die zweite Grenzfläche 54 am Stator 32 weist sich axial zur Rotationsachse 27 erstreckende und konzentrisch zur Rotationsachse 27 angeordnete Vertiefungen 58, 60, 62 auf, wobei die Vertiefungen 58, 60, 62 jeweils eine über den Umfang des Stators 32 ausgebildete Ringnut bilden. Die Ausbildung der Vertiefungen 58, 60, 62 ist dabei so gewählt, dass die durch die Vertiefungen 58, 60, 62 ausgebildeten Ringnuten unterschiedliche Durchschnittsradien zur Rotationsachse 27 aufweisen. Bei dem in Figur 2 dargestellten Beispiel sind auf der zweiten Grenzfläche 54 drei Vertiefungen 58, 60, 62 ausgebildet, wobei die durch die Vertiefung 58 ausgebildete Ringnut den größten Durchschnittsradius und die durch die Vertiefung 62 ausgebildete Ringnut den kleinsten Durchschnittsradius aufweist.

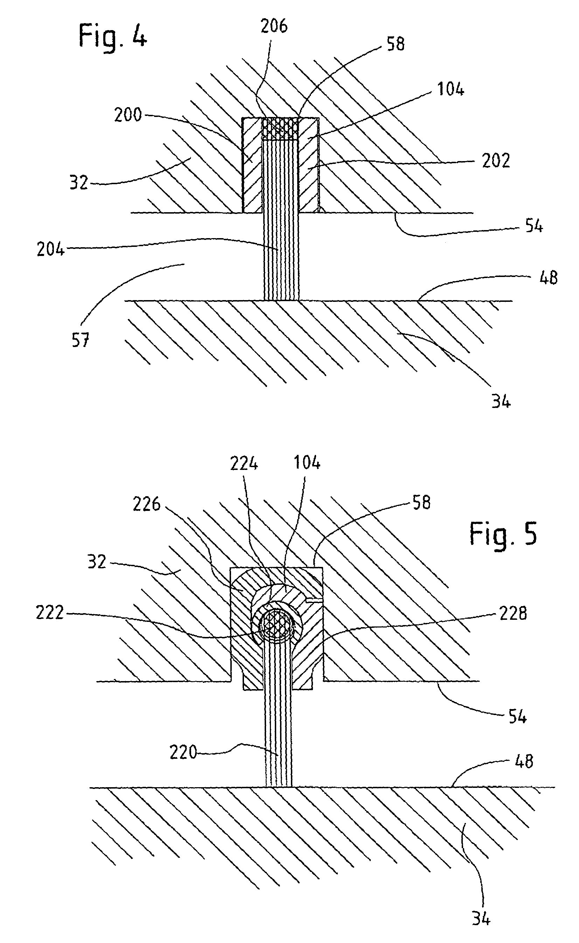

In den durch die Vertiefungen 58, 60, 62 ausgebildeten Ringnuten sind als Bürstendichtungen ausgebildete Dichtmittel 104 angeordnet. Derartige als Bürstendichtungen ausgebildete Dichtmittel 104 sind in den Figuren 4 und 5 dargestellt. Eine erste Ausführungsform zeigt Figur 4, in dem das Dichtmittel 104 eine erste und eine zweite Ringscheibe 200, 202 aufweist. Zwischen den Ringscheiben 200, 202 sind eine Vielzahl von Fasern oder Drahtfäden 204 angeordnet, die aus dünnen Metalldrähten gefertigt sind. Mittels einer Schweißnaht 206 werden die Drahtfäden 204 miteinander und mit den beiden Ringscheiben 200, 202 verschweißt. Die Ringscheiben 200, 202 dienen gleichzeitig als Stützscheiben zur Abstützung der Drahtfäden 204. Die Ringscheiben 200, 202, die Schweißnaht 206 sowie die Vielzahl von Drahtfäden 204 sind so bemessen, dass sie mit den Vertiefungen 58 eine Passung bilden und dort fixierbar sind. Die Drahtfäden 204 erstrecken sich in axialer Richtung zur Rotationsachse 27 bis zur ersten Grenzfläche 48 an dem Rotor 34, so dass der zwischen den Grenzflächen 48, 54 ausgebildete Bewegungsspalt 57 durch die Drahtfäden 204 abgedichtet wird.

Eine alternative Ausführungsform der als Bürstendichtung ausgebildeten Dichtmittel 104 ist in Figur 5 dargestellt. Hierbei werden eine Vielzahl von Fasern oder Fäden 220 um einen als Ring ausgebildeten Drahtkern 222 gelegt und von einem Klemmring 224 fest auf den Drahtkern 222 geklemmt. Um den Klemmring 224 sind Ringprofile 226, 228 gelegt, die den Klemmring 224 und damit auch die um den Drahtkern 222 gelegte Vielzahl von Fäden 220 einspannen. Gleichzeitig dienen die Ringprofile 226, 228 als Stützscheiben für die Fäden 220 und als Passscheiben für das Dichtmittel 104, wobei die Ringprofile 226, 228 derart bemessen sind, dass sie mit den Vertiefungen 58 eine Passung bilden und dort fixierbar sind. Die Fäden 220 erstrecken sich in axialer Richtung zur Rotationsachse 27 bis zur ersten Grenzfläche 48 an dem Rotor 34, so dass der zwischen den Grenzflächen 48, 54 ausgebildete Bewegungsspalt 57 durch die Fäden 220 abgedichtet wird. Diese Ausführungsform hat den Vorteil, dass die Fäden 220 durch einen Klemmring 224 miteinander verbunden bzw. fixiert werden, so dass auf eine Schweißnaht 206, gemäß dem Beispiel aus in Figur 4, verzichtet werden kann. Dadurch können auch andere, nicht metallische Fäden 220 oder Fasern aus Kunststoff oder Keramik verwendet werden.

In beiden der in den Figuren 4 und 5 gezeigten Ausführungsbeispielen der Dichtmittel 104 sind der axiale Abstand der Grenzflächen 48, 54 zueinander bzw. die Länge der Fäden 204, 220 der Dichtmittel 104 derart gewählt, dass die Dichtmittel 104 mit den Fäden 204, 220 an der Grenzfläche 48 abdichtend anliegen. Die als Bürstendichtungen ausgebildeten Dichtmittel 104 weisen einen nur sehr geringen Verschleiß auf und besitzen aufgrund der hohen Faden- bzw. Faserdichte eine sehr gute Dichtwirkung bzw. geringe Leckage. Die hohe Dichtwirkung hält auch bei Relativgeschwindigkeiten zwischen Stator 32 und Rotor 34 an, wobei mit zunehmender Rotationsgeschwindigkeit des Rotors 34 die Leckage zunimmt. Dennoch arbeiten die als Bürstendichtungen ausgebildeten Dichtmittel 104 zuverlässiger als herkömmliche Wellendichtungen bzw. berührende Dichtungen. Insbesondere können Maßungenauigkeiten an den Grenzflächen 48 bzw. an den Dichtflächen toleriert werden, da die Faser- bzw. Fadenbündel 204, 220 einer Bürstendichtung sich der durch Maßungenauigkeiten hervorgerufenen Oberflächenänderungen anpassen können. Bürstendichtungen erzeugen ohne Rotation, beispielsweise bei der Befüllung eines Reifens 26 eines stehenden Schleppers 10 eine vergleichbar gute Dichtwirkung.

Durch die in den Vertiefungen 58, 60, 62 angeordneten Dichtmittel 104 wird zwischen den Vertiefungen 58, 60 eine dichtfeste erste Kammer 106 und zwischen den Vertiefungen 60, 62 eine dichtfeste zweite Kammer 108 ausgebildet, wobei die Kammern 106, 108 radial durch die Dichtmittel 104 und axial durch die Grenzflächen 48, 54 begrenzt werden. Der erste Kanal 46 sowie der dritte Kanal 52 münden dabei in die erste Kammer 106 und der zweite Kanal 50 sowie der vierte Kanal 56 münden in die zweite Kammer 108.

Die in der Figur 2 dargestellte Vorrichtung 30 dient als Drehdurchführung für eine Reifenbefüllanlage an einem Schlepper 10, wobei die Durchführung in axialer Richtung erfolgt, d.h. die an dem Stator 32 und dem Rotor 34 ausgebildeten Grenzflächen 48, 54 sind axial zur Rotationsachse 27 beabstandet ausgebildet. Der im Stator 32 ausgebildete dritte Kanal 52 ist mit einer Druckquelle 110 verbunden, die zum Befüllen des Reifens 26 Druckluft in den dritten Kanal 52 fördert. Die Druckluft strömt dabei in die erste Kammer 106 und von dort aus in den ersten Kanal 46. Während des Druckaufbaus bzw. der Druckluftzufuhr kann der Rotor 34 seine Drehbewegung bzw. Rotationsbewegung gegenüber dem Stator 32 beibehalten. Das am Reifen 26 vorgesehene Reifenventil 47 öffnet sich unter Druckluftzufuhr in Richtung des Reifens 26, so dass Druckluft aus dem dritten Kanal 52, über die erste Kammer 106 und über den ersten Kanal 46 in den Reifen 28 strömen kann. Sobald die Druckluftzufuhr von dem dritten Kanal 52 unterbrochen wird, schließt sich das Reifenventil 47 selbsttätig durch den vom Reifen 26 her wirkenden Druck.

Der im feststehenden Teil 32 ausgebildete vierte Kanal 56 ist ebenfalls mit der Druckquelle 110 verbunden, wobei die Druckquelle 110 nur zum Entleeren des Reifens 26 zugeschaltet wird, so dass zum Entleeren des Reifens 26 Druckluft in den vierten Kanal 56 gefördert wird. Die Druckluft strömt dabei in die zweite Kammer 108 und von dort aus in den zweiten Kanal 50. Der zweite Kanal 50 ist derart mit dem Reifenventil 47 verbunden, dass die in den zweiten Kanal 50 strömende Druckluft das Reifenventil 47 öffnet, so dass die im Reifen 26 enthaltene Luft durch das Reifenventil 47 in den ersten Kanal 46 und von dort aus über die erste Kammer 106 in den dritten Kanal 52 strömen kann. Von dort aus kann die Luft durch ein Entlüftungsventil (nicht gezeigt) an die Umgebung abgegeben werden. Sobald die Druckluftzufuhr zum vierten Kanal 56 wieder unterbrochen wird, schließt das Radventil 47 selbsttätig unter dem im Reifen 26 herrschenden Druck. Die Ansteuerung der Druckversorgung bzw. die Ansteuerung des Entlüftungsventils erfolgt durch eine geeignete Steuereinrichtung, die in der Kabine 13 des Schleppers 10 installiert ist.

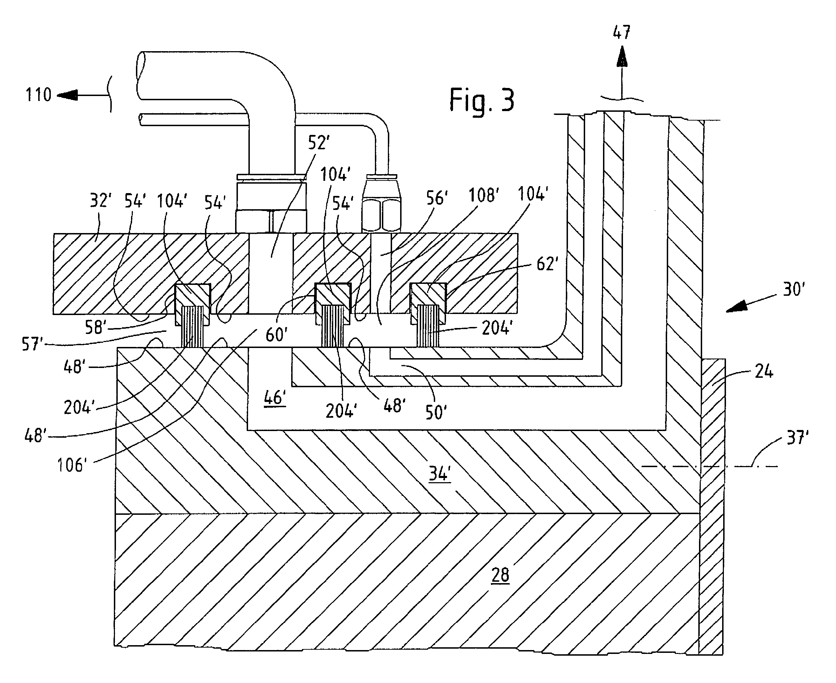

Figur 3 zeigt ein alternatives Ausführungsbeispiel einer Vorrichtung 30' für eine Drehdurchführung einer Reifenbefüllanlage. Die Vorrichtung 30' stellt ein Ausführungsbeispiel dar, bei dem die Drehdurchführung in zur Rotationsachse 27 radialer Richtung erfolgt, d.h. die an dem Stator 32' und dem Rotor 34' ausgebildeten Grenzflächen 48', 54' sind radial zur Rotationsachse 27 beabstandet ausgebildet. Die Funktionsweise gleicht im Wesentlichen der Funktionsweise des in Figur 2 dargestellten Beispiels, wobei die einzelnen Unterschiede im Folgenden beschrieben sind. Die Grenzfläche 48' ist als eine sich axial zur Rotationsachse 27 und in Umfangsrichtung erstreckende und radial nach außen gerichtete Grenzfläche 48' ausgebildet. Die Grenzfläche 54' ist als eine sich axial zur Rotationsachse 27 und in Umfangsrichtung erstreckende und radial nach innen gerichtete Grenzfläche 54' ausgebildet. Ferner sind die als Bürstendichtungen ausgebildeten Dichtmittel 104' derart ausgebildet, dass die Fäden 204' (oder eine entsprechend der in Figur 5 beschriebene Ausführungsform der Fäden 220) sich entsprechend radial zur Rotationsachse 27 in Richtung der Grenzfläche 48' des Rotors 34' erstrecken und die Grenzfläche 48' abdichten, ansonsten weisen die Dichtmittel 104' eine gleiche Funktion und Eigenschaft sowie einen gleichen Aufbau auf, wie die Dichtmittel 104 des Beispiels aus Figur 2. Die Vertiefungen 58', 60', 62' zur Aufnahme bzw. Fixierung der Dichtmittel 104' sind an der Grenzfläche 54' des Stators 32' ausgebildet und stellen drei axial zur Rotationsachse 27 beabstandete Ringnuten dar, die sich über den gesamten Umfang der Grenzfläche 54' erstrecken. Die im Rotor 34' ausgebildeten Kanäle 46', 50' weisen einen u-förmigen Verlauf auf, so dass die Kanäle 46', 50' in die durch die Dichtmittel 104' abgegrenzten Kammern 106', 108' münden. Der Rotor 34' ist auf gleiche Weise über beispielsweise Verschraubungen 37' mit der Radscheibe 24 bzw. mit der Radnabe 28 verbunden. Der Stator 32' ist auch hier mit dem Achskörper 36 verbunden (nicht gezeigt). Das Befüllen und Entleeren des Reifens 26 erfolgt auf gleiche Weise wie bei dem in Figur 2 dargestellten Beispiel.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. So kann beispielsweise auf die Anordnung der Kanäle 50, 56 bzw. 50', 56' verzichtet werden und ein elektrisch betriebenes Reifenventil 47 eingesetzt werden. Damit würde ein Dichtmittel 104 bzw. 104' und damit die Kammer 108 bzw. 108' entfallen und lediglich die Kammer 106 bzw. 106' zur Übertragung von Druckluft durch zwei angrenzende Dichtmittel 104 bzw. 104' abgedichtet werden.

## Patentansprüche

1. Vorrichtung, insbesondere Drehdurchführung für eine Reifenbefüllanlage, mit einem um eine Rotationsachse (27) rotierbaren und eine erste Grenzfläche (48, 48') aufweisenden Körper (34, 34'), einem gegenüber dem rotierbaren Körper (34, 34') feststehenden und eine zweite Grenzfläche (54, 54') aufweisenden Körper (32, 32'), wenigstens einer zwischen dem rotierbaren Körper (34, 34') und dem feststehenden Körper (32, 32') ausgebildeten Kammer (106, 108, 106', 108'), wobei die wenigstens eine Kammer (106, 108, 106', 108') durch die Grenzflächen (48, 54, 48', 54') der Körper (34, 32, 34', 32') und durch wenigstens zwei sich zwischen den Grenzflächen (34, 32, 34', 32') erstreckende Dichtmittel (104, 104') begrenzt ist, und wenigstens einem in dem feststehenden und in dem rotierbaren Körper (32, 34, 32', 34') ausgebildeten und zwischen den Dichtmitteln (104, 104') in die wenigstens eine Kammer (106, 108, 106', 108') mündenden Kanal (46, 50, 52, 56, 46', 50', 52', 56'), **dadurch gekennzeichnet, dass** die Dichtmittel (104, 104') als Bürstendichtungen ausgebildet sind.

2. Vorrichtung nach Anspruch 1, **dadurch gekennzeichnet, dass** zwischen der ersten und zweiten Grenzfläche (48, 54, 48', 54') eine oder mehrere weitere durch eine oder mehrere weitere Dichtmittel (104, 104') abgrenzbare Kammern (106, 108, 106', 108') ausgebildet sind.

3. Vorrichtung nach einem der vorhergehenden Ansprüche, **dadurch gekennzeichnet, dass** auf wenigstens einer der Grenzflächen (48, 54, 48', 54') Vertiefungen (58, 60, 62, 58', 60', 62') ausgebildet sind, in welchen die Bürstendichtungen (104, 104'), lagefixiert zwischen den Grenzflächen (48, 54, 48', 54') geführt sind.

4. Vorrichtung nach einem der vorhergehenden Ansprüche, **dadurch gekennzeichnet, dass** die Bürstendichtungen (104, 104'), metallische und/oder nicht-metallische Fasern oder Fäden aufweisen.

5. Vorrichtung einem der vorhergehenden Ansprüche, **dadurch gekennzeichnet, dass** der wenigstens eine Kanal (46, 50, 52, 56, 46', 50', 52', 56') als eine druckmittelbetriebene Abführ- und/oder Zuführ- und/oder Steuerleitung ausgebildet ist.

6. Vorrichtung nach einem der vorhergehenden Ansprüche, **dadurch gekennzeichnet, dass** der wenigstens eine Kanal (46, 50, 52, 56, 46', 50', 52', 56') mit einem mit Druckmittel befüllbaren Reifen (26) verbindbar ist.

7. Vorrichtung nach einem der vorhergehenden Ansprüche, **dadurch gekennzeichnet, dass** der wenigstens eine Kanal (46, 50, 52, 56, 46', 50', 52', 56') mit einem durch Druckmittel ansteuerbaren Ventil (47) verbindbar ist.

8. Vorrichtung nach einem der vorhergehenden Ansprüche, **dadurch gekennzeichnet, dass** der wenigstens eine Kanal (46, 50, 52, 56, 46', 50', 52', 56') mit einer Druckmittelquelle (110), insbesondere mit einer Druckluftquelle, verbindbar ist.

9. Vorrichtung nach einem der vorhergehenden Ansprüche, **dadurch gekennzeichnet, dass** der feststehende Körper (32, 32') mit einem feststehenden Achskörper (36) verbunden ist.

10. Vorrichtung nach einem der vorhergehenden Ansprüche, **dadurch gekennzeichnet, dass** die Grenzflächen (48, 54, 48', 54') sich radial zur Rotationsachse (27) erstrecken.

11. Vorrichtung nach einem der Ansprüche 1 bis 9, **dadurch gekennzeichnet, dass** die Grenzflächen (48, 54, 48', 54') sich axial zur Rotationsachse (27) erstrecken.

12. Fahrzeug mit einer Vorrichtung (30, 30') nach einem oder mehreren der vorhergehenden Ansprüche.

## Claims

1. Device, in particular rotary joint for a tyre inflation system, with a body (34, 34') which can be rotated about an axis of rotation (27) and has a first boundary surface (48, 48'), a body (32, 32') which is fixed in relation to the rotatable body (34, 34') and has a second boundary surface (54, 54'), at least one chamber (106, 108, 106', 108') which is formed between the rotational body (34, 34') and the fixed body (32, 32'), wherein the at least one chamber (106, 108, 106', 108') is bounded by the boundary surfaces (48, 54, 48', 54') of the bodies (34, 32, 34', 32') and by at least two sealing means (104, 104') extending between the boundary surfaces (34, 32, 34', 32'), and at least one channel (46, 50, 52, 56, 46', 50', 52', 56') which is formed in the fixed and in the rotatable bodies (32, 34, 32', 34') and opens between the sealing means (104, 104') into the at least one chamber (106, 108, 106', 108'), **characterized in that** the sealing means (104, 104') are designed as brush seals.

2. Device according to Claim 1, **characterized in that** one or more further chambers (106, 108, 106', 108') which can be delimited by one or more further sealing means (104, 104') are formed between the first and second boundary surfaces (48, 54, 48', 54') .

3. Device according to one of the preceding claims, **characterized in that** depressions (58, 60, 62, 58', 60', 62') in which the brush seals (104, 104') are guided in a fixed position between the boundary surfaces (48, 54, 48', 54') are formed on at least one of the boundary surfaces (48, 54, 48', 54').

4. Device according to one of the preceding claims, **characterized in that** the brush seals (104, 104') have metallic and/or non-metallic fibres or threads.

5. Device according to one of the preceding claims, **characterized in that** the at least one channel (46, 50, 52, 56, 46', 50', 52', 56') is designed as a removal line and/or supply line and/or control line operated by pressure medium.

6. Device according to one of the preceding claims, **characterized in that** the at least one channel (46, 50, 52, 56, 46', 50', 52', 56') can be connected to a tyre (26) which can be filled with pressure medium.

7. Device according to one of the preceding claims, **characterized in that** the at least one channel (46, 50, 52, 56, 46', 50', 52', 56') can be connected to a valve (47) which can be activated by pressure medium.

8. Device according to one of the preceding claims, **characterized in that** the at least one channel (46, 50, 52, 56, 46', 50', 52', 56') can be connected to a pressure medium source (110), in particular to a compressed air source.

9. Device according to one of the preceding claims, **characterized in that** the fixed body (32, 32') is connected to a fixed axle body (36).

10. Device according to one of the preceding claims, **characterized in that** the boundary surfaces (48, 54, 48', 54') extend radially with respect to the axis of rotation (27).

11. Device according to one of Claims 1 to 9, **characterized in that** the boundary surfaces (48, 54, 48', 54') extend axially with respect to the axis of rotation (27).

12. Vehicle with a device (30, 30') according to one or more of the preceding claims.

## Revendications

1. Dispositif, en particulier raccord tournant, pour un dispositif de gonflage de pneumatiques, comportant un corps (34, 34') apte à tourner autour d'un axe de rotation (27) et comportant une première interface (48, 48'), un corps (32, 32') fixe par rapport au corps rotatif (34, 34') et comportant une deuxième interface (54, 54'), au moins une chambre (106, 108, 106', 108') réalisée entre le corps rotatif (34, 34') et le corps fixe (32, 32'), au moins une chambre (106, 108, 106', 108') étant délimitée par les interfaces (48, 54, 48', 54') des corps (34, 32, 34', 32') et par au moins deux garnitures d'étanchéité (104, 104') disposées entre les interfaces (48, 54, 48', 54'), et au moins un conduit (46, 50, 52, 56, 46', 50', 52', 56') débouchant entre les garnitures d'étanchéité (104, 104') dans au moins une chambre (106, 108, 106', 108'), **caractérisé en ce que** les garnitures d'étanchéité (104, 104') sont réalisées sous forme de joints brosses.

2. Dispositif selon la revendication 1, **caractérisé en ce qu'**une ou plusieurs autres chambres (106, 108, 106', 108'), pouvant être délimitées par une ou plusieurs autres garnitures d'étanchéité (104, 104'), sont réalisées entre la première et la deuxième interface (48, 54, 48', 54').

3. Dispositif selon l'une quelconque des revendications précédentes, **caractérisé en ce que** sur au moins une des interfaces (48, 54, 48', 54') sont réalisés des creux (58, 60, 62, 58', 60', 62'), dans lesquels les joints brosses (104, 104') sont logés en position fixe entre les interfaces (48, 54, 48', 54').

4. Dispositif selon l'une quelconque des revendications précédentes, **caractérisé en ce que** les joints brosses (104, 104') comportent des fibres ou fils métalliques et/ou non métalliques.

5. Dispositif selon l'une quelconque des revendications précédentes, **caractérisé en ce que** au moins un conduit (46, 50, 52, 56, 46', 50', 52', 56') est réalisé sous forme de conduite d'évacuation et/ou d'admission et de commande, recevant un fluide sous pression.

6. Dispositif selon l'une quelconque des revendications précédentes, **caractérisé en ce que** au moins un conduit (46, 50, 52, 56, 46', 50', 52', 56') peut être relié à un pneumatique (26) destiné à être rempli d'un fluide sous pression.

7. Dispositif selon l'une quelconque des revendications précédentes, **caractérisé en ce que** au moins un conduit (46, 50, 52, 56, 46', 50', 52', 56') peut être relié à une valve (47) apte à être commandée par le fluide sous pression.

8. Dispositif selon l'une quelconque des revendications précédentes, **caractérisé en ce que** au moins un conduit (46, 50, 52, 56, 46', 50', 52', 56') peut être relié à une source de fluide sous pression (110), en particulier à une source d'air comprimé.

9. Dispositif selon l'une quelconque des revendications précédentes, **caractérisé en ce que** le corps fixe (32, 32') est relié à un corps axial (36) fixe.

10. Dispositif selon l'une quelconque des revendications précédentes, **caractérisé en ce que** les interfaces (48, 54, 48', 54') s'étendent dans le sens radial par rapport à l'axe de rotation (27).

11. Dispositif selon l'une quelconque des revendications 1 à 9, **caractérisé en ce que** les interfaces (48, 54, 48', 54') s'étendent dans le sens axial par rapport à l'axe de rotation (27).

12. Véhicule comportant un dispositif (30, 30') selon une ou plusieurs des revendications précédentes.
